# EUROPÄISCHE PATENTSCHRIFT

(11) **EP 0 792 892 B1**
(45) Veröffentlichungstag und Bekanntmachung des Hinweises auf die Patenterteilung: **30.05.2001**
(21) Anmeldenummer: 97103117.4
(22) Anmeldetag: 26.02.1997
(51) Int. Cl.: C08F 210/02, C08F 4/38, C10L 1/18

(54) **Verwendung von Ethylen/Vinylformiat-Copolymere als Fliessverbesserer und diese enthaltende Brenn- und Treibstoffzusammensetzungen**
Use of ethylene/vinylformiate copolymers as flow improvers and fuel compositions containing them
Utilisation des copolymères d'éthylène-vinylacetate comme agent améliorant l'écoulement et composition de combustible ou de carburants les contenant

(30) Priorität: 29.02.1996 DE 19607744
(43) Veröffentlichungstag der Anmeldung: 03.09.1997
(73) Patentinhaber: BASF AKTIENGESELLSCHAFT, 67056 Ludwigshafen (DE)
(72) Erfinder: Deckers, Andreas, Dr., 55234 Flomborn (DE); Rühl, Thomas, Dr., 67227 Frankenthal (DE); Klimesch, Roger, Dr., 64665 Alsbach-Hähnlein (DE); Wenderoth, Bernd, Dr., 69488 Birkenau (DE); Müller, Hans-Joachim, Dr., 67269 Grünstadt (DE)
(74) Vertreter: Isenbruck, Günter, Dr.

(56) Entgegenhaltungen:
- EP-A- 0 008 775
- EP-A- 0 136 698
- EP-A- 0 217 602
- EP-A- 0 344 353
- EP-A- 0 348 200
- JP-B- 44 029 741
- US-A- 4 680 357

## Beschreibung

Die Erfindung betrifft die Verwendung von binären Ethylen/Vinylformiat-Copolymeren als Fließverbesserer, insbesondere in Erdöl-Mitteldestillaten wie Dieselkraftstoffen und leichten Heizölen, sowie diese umfassende Brenn- und Treibstoffzusammensetzungen.

US-PS 3,159,608 betrifft die Herstellung von Pourpunkterniedrigern, insbesondere zur Verwendung mit Mitteldestillaten. Es wird ein Verfahren zur Copolymerisation von Ethylen und bis zu etwa 50 Gew.-% von Vinylacetat, Vinylpropionat, Methylmethacrylat, Allylethylether, Divinylether, Acrylnitril oder Vinylacetonitril beschrieben. Bevorzugt sind Ethylen/Vinylacetat-Copolymere.

US-PS 3,389,979 betrifft die Verbesserung der Fließfähigkeit von Ölen, insbesondere von Mitteldestillaten. Es wird beschrieben, daß eine gute Handhabbarkeit oder Fließfähigkeit eines Brenn- und Treibstofföls bei niedrigen Temperaturen mit einem Copolymer aus Ethylen und Vinylacetat erhalten wird.

US-PS 3,567,639 betrifft einen Pourpunkterniedriger für Rohöl, Schieferöl oder Brenn- und Treibstofföl. Der Pourpunkterniedriger ist dabei ein Copolymer aus Ethylen und Vinylpropionat, Vinylhexanoat, Vinyloctanoat, Vinyldodecanoat, Vinylbehenoat, Isopropenylacetat oder Octadecylmyristoat. Besonders bevorzugter Ester ist dabei Vinylacetat.

Die bekannten Ethylen/Vinylacetat-Copolymere weisen den Nachteil auf, daß sie nicht universell in allen Erdöldestillaten gleich gut wirksam sind als Fließverbesserer. Ihre Wirkung hängt u.a. von der Herkunft des dem Erdöldestillat zugrunde liegenden Rohöls, der angewendeten Verarbeitungstechnik für das Rohöl und der Art und Menge an n-Paraffinen im Erdöldestillat ab.

Verfahren zur Polymerisation und Copolymerisation von Ethylen sind bekannt und beispielsweise beschrieben in Ullmann's Enzyklopädie der Technischen Chemie, 4. Auflage, Band 19, S. 169-223, insbesondere S. 169-175.

Eine Aufgabe der vorliegenden Erfindung ist die Bereitstellung eines Fließverbesserers, der die für Ethylen/Vinylacetat-Copolymere beschriebenen Nachteile vermeidet.

Eine weitere Aufgabe der vorliegenden Erfindung ist die Bereitstellung eines Fließverbesserers für Erdöldestillate, der wirksam ist für eine Vielzahl von Erdöldestillaten.

Eine weitere Aufgabe der vorliegenden Erfindung ist die Bereitstellung eines Verfahrens zur Herstellung dieses Fließverbesserers.

Eine weitere Aufgabe der vorliegenden Erfindung ist die Bereitstellung von Brenn- und Treibstoffzusammensetzungen mit verbesserten Fließeigenschaften.

Diese und weitere Aufgaben werden gelöst durch die erfindungsgemäße Verwendung von binären Copolymeren, bestehend aus Ethylengrundbausteinen und Vinylformiatgrundbausteinen.

Diese Copolymere werden hergestellt in einem Verfahren, wobei in einem Rührautoklaven, einem Rohrreaktor oder einem Rührautoklaven mit nachgeschaltetem Rohrreaktor die Monomere Ethylen, Vinylformiat, radikalisch polymerisiert werden bei einem Druck von 500 bis 3.500 bar und einer Temperatur von 150 bis 330 °C in Gegenwart mindestens eines Radikalbildners aus radikalisch zerfallenden, vorzugsweise organischen, Peroxiden, Luft oder Sauerstoff, und ggf. in Gegenwart eines Molekulargewichtsreglers, für eine Reaktionszeit von 60 bis 240 s, die Verwendung der Copolymere und die Brenn- und Treibstoffzusammensetzungen, wie sie nachstehend beschrieben sind. Weitere Aufgaben werden durch die bevorzugten Ausführungsformen gelöst.

Erfindungsgemäß wurde gefunden, daß Ethylengrundbausteine und Vinylformiatgrundbausteine umfassende Copolymere (Ethylen/Vinylformiat-Copolymere) als Fließverbesserer für Erdöldestillate verwendbar sind und dabei den Erdöldestillaten bessere Eigenschaften verleihen, als dies bei der Verwendung von Ethylen/Vinylacetat-Copolymeren der Fall ist.

### ETHYLEN/VINYLFORMIA T-COPOLYMERE

Die erfindungsgemäß verwendeten Copolymere bestehen aus Ethylengrundbausteinen und Vinylformiatgrundbausteinen.

Dabei machen die Vinylformiatgrundbausteine gemäß einer Ausführungsform der Erfindung 1-50, vorzugsweise 10-40, insbesondere 20-35 Gew.-% des Copolymers aus. Gemäß einer Ausführungsform bilden die Ethylengrundbausteine den verbleibenden Rest des Copolymers, d.h. das Copolymer besteht aus Ethylengrundbausteinen und Vinylformiatgrundbausteinen (abgesehen von

Resten eines Radikalbildners oder Molekulargewichtreglers).

Das Zahlenmittel des Molekulargewichts des erfindungsgemäßen Copolymers beträgt gemäß einer Ausführungsform der Erfindung 500-200.000, vorzugsweise 500-10.000, insbesondere 500-5.000 g/mol. Das Molekulargewicht kann dabei mittels Dampfphasenosmometrie bestimmt werden.

Üblicherweise wird statt des Zahlenmittels des Molekulargewichts die Schmelzviskosität des erhaltenen Copolymers bestimmt, die eine Aussage über das Molekulargewicht erlaubt.

Die Schmelzviskosität wird dabei bestimmt mittels Rotationsviskosimeter nach DIN 53019 bei 120 °C. Gemäß einer Ausführungsform der Erfindung weisen die Copolymere Schmelzviskositäten bei 120 °C von 10 bis 10000 cst, vorzugsweise 50 bis 1000 cst, insbesondere 100 bis 500 cst auf.
Die erfindungsgemäßen Copolymere enthalten neben den oben aufgeführten Grundbausteinen geringe Mengen an Radikalbildnern und ggf. Molekulargewichtsreglern, die zum Starten bzw. Regeln der Polymerisation dem Monomerengemisch zugefügt wurden. Diese Stoffe sind dabei zumindest teilweise in der Polymerhauptkette gebunden.

Die erfindungsgemäßen Copolymere können in Kombination mit einem oder mehreren üblicherweise verwendeten Additiv eingesetzt werden, wie z.B.

Antioxidantien, Korrosionsinhibitoren, Leitfähigkeitsverbesserern, Lubricity-Additiven, Paraffindispergatoren, Detergent-Additiven, Cetan-Zahl-Verbesserern, Antifoam-Additiven, Stabilitätsverbesserern oder anderen Fließverbesserern.

### HERSTELLUNG DER ETHYLEN/VINYLFORMIA T-COPOLYMERE

Das zur Herstellung der erfindungsgemäßen Copolymere verwendete Vinylformiat kann hergestellt werden nach dem in WO 95/09877 beschriebenen Verfahren.

Verfahren zur Polymerisation von Ethylen und ggf. von Comonomeren sind bekannt und beispielsweise beschrieben in Ullmann's Enzyklopädie der Technischen Chemie, 4. Auflage, Band 19, S. 169-175.

Dabei wird gemäß einer Ausführungsform der Erfindung die Polymerisation in einem Rührautoklaven ausgeführt, der beispielsweise ein gedrungener Autoklav oder ein langgestreckter Reaktor sein kann. Dabei ist es vorteilhaft, wenn der Autoklaveninhalt mit einem Rührer gut durchmischbar ist.

Bei der Polymerisation von Ethylen und Vinylformiat liegt dabei der Umsatz in der Regel in einem Bereich von 1 bis 35%.

Zur Polymerisation wird dem Reaktor ein komprimiertes Gasgemisch der Monomere zugeführt und gleichzeitig ein Radikalbildner, mit dem die radikalische Polymerisation gestartet wird. Gemäß einer Ausführungsform der Erfindung finden radikalisch zerfallende, vorzugsweise organische, Peroxide Verwendung, die ggf. in Form einer Lösung in einem Lösungsmittel eingeführt werden. Die Verwendung von Luft und/oder Sauerstoff ist ebenfalls möglich.

Durch Anpassung der Reaktionsbedingungen (Initiator, Druck, Gaseingangstemperaturen, ggf. vorliegende Molekulargewichtsregler) an vorgegebene Zielgrößen werden Reaktionstemperatur und Produktdaten (wie Comonomerzusammensetzung oder Schmelzindex) eingestellt. Beim langgestreckten Reaktortyp kann dabei über mehrere entlang dem Reaktor angeordnete Initiatoreinführpumpen die Reaktion gezielt gesteuert werden.

Die Reaktionstemperatur beträgt dabei gemäß einer Ausführungsform der Erfindung 150-330 °C, der Druck 500-3.500 bar.

Die Reaktionszeit bzw. Verweilzeit im Reaktor beträgt gemäß einer Ausführungsform der Erfindung 60 bis 240 s, um einen niedrigen Gehalt an freiem Vinylformiat im Copolymer, der nicht mehr als 5.000 ppm beträgt, zu erreichen.

Gemäß einer anderen Ausführungsform der Erfindung wird zur Polymerisation des Ethylens und Vinylformiats ein Rohrreaktor verwendet.

Dabei beträgt die Reaktorlänge gemäß einer Ausführungsform der Erfindung 600 bis 2000 Meter und der Rohrinnendurchmesser 15 bis 60 mm. Der Rohrreaktor kann als Einzonenreaktor oder als Rohrreaktor mit Kaltgas- und Initiatornachdosierung ausgelegt sein.

Beim Einzonenreaktor wird das gesamte umzusetzende Gemisch aus Ethylen, Vinylformiat, ggf. weiteren Comonomeren, Radikalbildnern, und ggf. Molekulargewichtsreglern am Reaktoreingang eingebracht und in einem Vorheizer auf die zum Polymerisationsstart notwendige Temperatur geheizt.

Im Rohrreaktor mit Kaltgas- und Radikalbildnernachdosierung wird der dem Reaktor zugeführte Monomerstrom in mindestens zwei Teilströme aufgeteilt. An bestimmten Stellen des Reaktors werden dabei kalte Monomere oder Initiator allein eingebracht.

Als Initiator wird beim Rohrreaktorverfahren ein radikalisch zerfallendes, vorzugsweise organisches, Peroxid, Luft oder Sauerstoff, oder ein Gemisch daraus, verwendet.

Der verwendete Druck, Temperatur und die Reaktions- bzw. Verweilzeit im Reaktor haben die gleichen Werte, wie sie beim Rührautoklaven beschrieben sind.

Gemäß einer weiteren Ausführungsform der Erfindung wird die Polymerisation in einem Rührautoklaven durchgeführt. Ein Rohrreaktor kann dem Autoklaven nachgeschaltet sein.

Das den oder die Reaktoren verlassende Reaktionsgemisch wird gemäß einer Ausführungsform zunächst in einem Hochdruckabscheider auf 200-300 bar entspannt und in einem nachgeschalteten Niederdruckabscheider auf 1-3 bar entspannt. Im Niederdruckabscheider werden dabei wachsartige und flüssige Reaktionsprodukte abgetrennt mittels geeigneter Vorrichtungen.

Gemäß einer Ausführungsform der Erfindung wird das Polymerisationsverfahren kontinuierlich ausgeführt, wobei die Monomere, der Radikalbildner und ggf. der Molekulargewichtsregler kontinuierlich zugeführt werden und nicht umgesetzte Monomere im Kreislauf geführt werden. Dabei wird gemäß einer Ausführungsform der Erfindung sowohl das Eduktgemisch aus dem Hochdruckabscheider dem oder den Reaktor/Reaktoren wieder zugeführt, als auch die Edukte aus dem Niederdruckabscheider.

Dabei werden gemäß einer Ausführungsform der Erfindung die nicht umgesetzten Edukte aus dem Niederdruckabscheider mit zusätzlichem Eduktgemisch einem Vorverdichter zugeführt, die nicht umgesetzten Edukte aus dem Hochdruckabscheider jedoch direkt einem Nachverdichter, der sich zwischen Vorverdichter und Reaktor befindet. Die Monomere werden gemäß dieser Ausführungsform dem Reaktor über einen Vorverdichter und/oder Nachverdichter zugeführt.

### RADIKALBILDNER

Für die erfindungsgemäße Copolymerisation von Ethylen und Vinylformiat können beliebige geeignete Radikalbildner eingesetzt werden. Gemäß einer Ausführungsform der Erfindung wird mindestens ein Radikalbildner eingesetzt, aus radikalisch zerfallenden, vorzugsweise organischen, Peroxiden, Luft oder Sauerstoff.

Beispiele geeigneter Radikalbildner sind organische Peroxide, wie Perester, Perketale, und Percarbonate.

Gemäß einer Ausführungsform der Erfindung ist der Radikalbildner ein Gemisch aus ter.-Butylperpivalat und tert.-Butylperisononanoat in einem molaren Verhältnis von 10:1 bis 1:10, vorzugsweise 5:1 bis 1:5, insbesondere 1:1.

Gemäß einer bevorzugten Ausführungsform der Erfindung wird das Gemisch aus Ethylen und Vinylformiat mit 10-1.000 mol-ppm (bezogen auf Ethylen und Vinylformiat), vorzugsweise 20-100 mol-ppm eines Radikalbildners aus tert.-Butylperpivalat und tert.-Butylperisononanoat im Molverhältnis 1:1 polymerisiert bei einer Temperatur von weniger als 270 °C.

### MOLEKULARGEWICHT SREGLER

Als Molekulargewichtsregler finden sowohl beim Rührautoklaven als auch beim Rohrreaktor gemäß einer Ausführungsform der Erfindung aliphatische und olefinische Kohlenwasserstoffe, wie auch vorzugsweise aliphatische Aldehyde, insbesondere Propionaldehyd Verwendung. Jede andere als Molekulargewichtsregler geeignete Verbindung kann ebenfalls erfindungsgemäß eingesetzt werden.

Die abgeschiedenen Reaktionsprodukte werden ohne weitere Aufarbeitung eingesetzt.

Nicht polymerisiertes Vinylformiat bzw. andere Monomere, sofern vorhanden, können im Produkt verbleiben.

Die Molekulargewichtsbestimmung des Polymers erfolgt wie vorstehend beschrieben über die Bestimmung seiner Viskosität.

Neben Ethylen und Vinylformiat können weitere Arten von Monomeren copolymerisiert werden. Beispiele geeigneter Comonomere sind vorstehend angegeben.

Gemäß einer bevorzugten Ausführungsform werden nur Ethylen und Vinylformiat als Monomere polymerisiert zu einem Copolymer, das im wesentlichen aus Ethylengrundbausteinen und Vinylformiatgrundbausteinen besteht, insbesondere nur aus Ethylengrundbausteinen und Vinylformiatgrundbausteinen besteht.

### VERWENDUNG DER ETHYLEN/VINYLFORMIA T-COPOLYMERE

Die erfindungsgemäßen Copolymere können erfindungsgemäß als Fließverbesserer verwendet werden, insbesondere als Fließverbesserer in Erdöldestillaten, vorzugsweise in Brenn- und Treibstoffzusammensetzungen, insbesondere in Mitteldestillaten wie Dieselkraftstoffen und leichten Heizölen.

Dabei sollte gemäß einer Ausführungsform der Erfindung der Gehalt an freiem, nicht einpolymerisiertem Vinylformiat im Copolymer einen Wert von 5.000 ppm (bezogen auf das Gesamtgewicht des Copolymers) nicht überschreiten.

Die Verbesserung der Fließeigenschaften kann dabei nach DIN EN 116 als Erniedrigung des "Cold Filter Plugging Points (CFPP)" bestimmt werden.

### BRENN- UND TREIBSTOFFZUSAMMENSETZUNGEN

Die erfindungsgemäßen Brenn- und Treibstoffzusammensetzungen umfassen eine Hauptmenge eines Brenn- und Treibstoffs und eine zur Verbesserung der Fließeigenschaften wirksame Menge eines Copolymers, wie es vorstehend beschrieben ist.

Gemäß einer Ausführungsform der Erfindung umfaßt die Brenn- und Treibstoffzusammensetzung dabei ein Mitteldestillat und 0,001-5 Gew.-%, vorzugsweise 0,001-0,2 Gew.-%, insbesondere 0,01-0,1 Gew.-% des Copolymers, bezogen auf das Gesamtgewicht der Zusammensetzung.

Die vorliegende Erfindung wird anhand der nachstehenden Beispiele weiter erläutert:

### Beispiel 1

### Herstellung der Ethylen/Vinylforniat-Copolymere

Die Copolymerisation von Ethylen und Vinylformiat wurde in einem kontinuierlich betriebenen Rührautoklaven mit 1 Liter Innenvolumen durchgeführt. Dabei betrug der Reaktionsdruck konstant 1.500 bar und die mittels kontinuierlich zudosiertem Peroxid eingestellte Reaktionstemperatur 220 °C. Der Ethylendurchsatz betrug dabei 350 mol/h. Dabei wurde als Radikalbildner ein Gemisch von tert.-Butylperpivalat (TBPP) und tert.-Butylperisononanoat (TBPIN) im Molverhältnis 1:1, gelöst in Isododecan, verwendet. Als Molekulargewichtsregler wurde Propionaldehyd verwendet, der dem Gasgemisch zudosiert wurde. Die in der nachstehenden Tabelle angegebenen Peroxidmengen beziehen sich auf die Monomerkonzentration an Ethylen und Vinylformiat in mol-ppm. Die Prozeßparameter zur Herstellung der Copolymere sind in der nachstehenden Tabelle 1 aufgeführt.

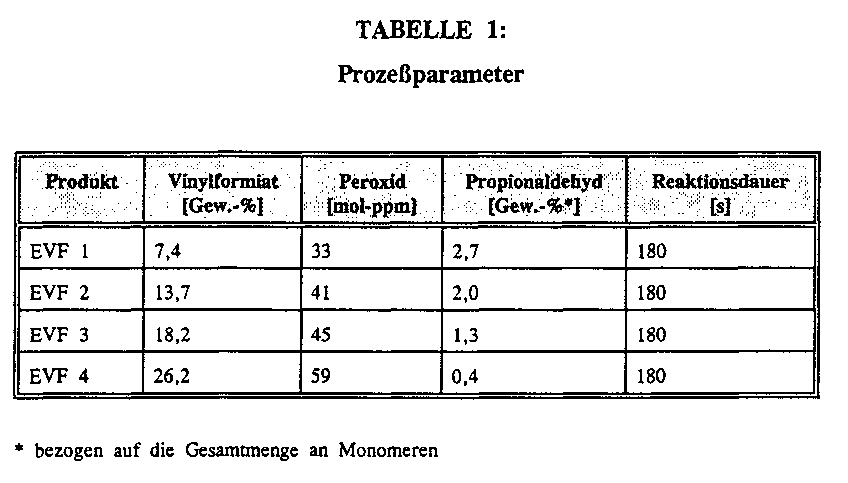

Bei der Polymerisation wurde ein Monomerengemisch aus Ethylen und Vinylformiat in der in der Tabelle angegebenen Zusammensetzung konstant nachgepreßt, um den Druck auf 1.500 bar zu halten.

Die Aufarbeitung des Produktgemisches erfolgte durch Entspannung auf Normaldruck. Eine weiterführende Aufarbeitung erfolgte nicht. Die Dosierung des Vinylformiats kann sowohl auf die Saugseite des Nachverdichters (ca. 200-250 bar) erfolgen als auch direkt in den Reaktor (> 1500 bar).

Die Eigenschaften der erhaltenen Copolymere sind in der nachstehenden Tabelle 2 angegeben.

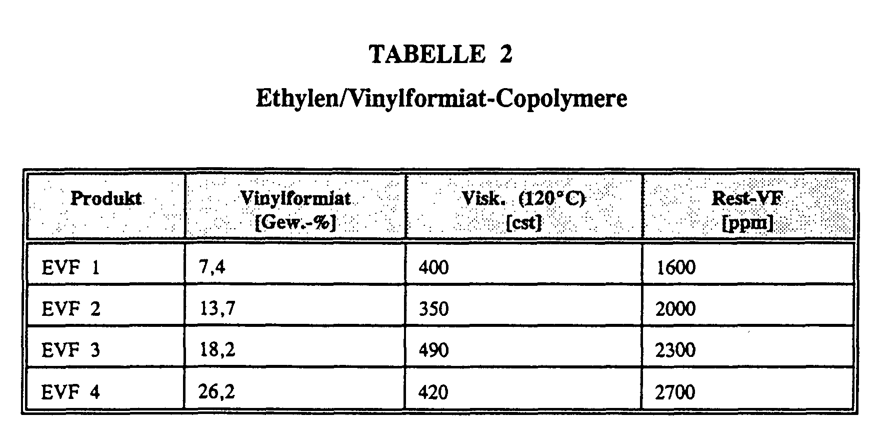

Die angegebene Viskosität ist dabei der Schmelzviskositätswert, der bei 120 °C bestimmt wurde nach dem vorstehend beschriebenen Verfahren:

Der Gehalt an Vinylformiatgrundbausteinen im Copolymer wurde bestimmt durch Elementaranalyse.

Der Gehalt an Restvinylformiat (Rest-VF) wurde durch Elementaranalyse vor und nach einer Umfällung des Polymeren aus Toluol bestimmt.

### Beispiel 2

### Brenn- und Treibstoffzusammensetzungen

Die erfindungsgemäßen Copolymere wurden in einer Reihe von Brenn- und Treibstoffzusammensetzungen geprüft, die Erdöl-Mitteldestillate waren. Es handelt sich dabei um Dieselkraftstoffe und leichte Heizöle handelsüblicher europäischer Raffineriequalität. Sie weisen die in der nachstehenden Tabelle 3 angegebenen Eigenschaften auf.

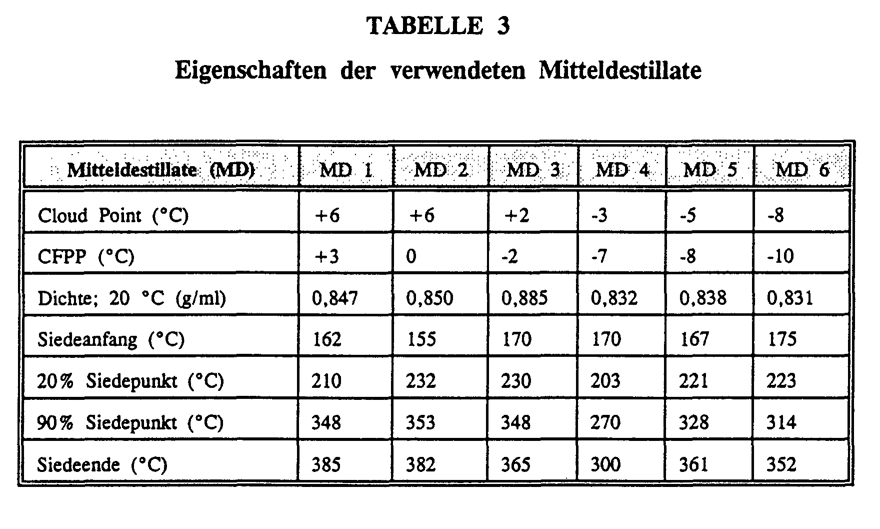

Dabei ist der Cloud Point (CP) nach ASTM D 2500 und der "Cold Filter Plugging Point" (CFPP) nach DIN EN 116 bestimmt worden.

Der 20%-Siedepunkt und 90%-Siedepunkt ist die Temperatur, bei 20 Vol-% bzw. 90 Vol-% des Ausgangsgemisches abdestilliert sind.

Die vorstehenden Erdöl-Mitteldestillate wurden mit den Fließverbesserern aus Beispiel 1 versetzt, die in 50%-iger Lösung im Lösungsmittel Solvent-Naphtha eingesetzt wurden. Zu Vergleichszwecken wurden außerdem bekannte Fließverbesserer mit den Bezeichnungen MDFI 1 und MDFI 2 verwendet. Dabei ist MDFI 1 ein Copolymer aus Ethylengrundbausteinen und Vinylpropionatgrundbausteinen mit etwa 40 Gew.-% Vinylpropionatgrundbausteinen und einer Schmelzviskosität von 380 cst. MDFI 2 ist ein Copolymer aus Ethylengrundbausteinen und Vinylacetatgrundbausteinen mit etwa 30 Gew.-% Vinylacetatgrundbausteinen und einer Schmelzviskosität von 420 cst.

Die Fließverbesserer wurden in die entsprechenden Öle in den in der nachstehenden Tabelle 4 angegebenen Mengen eingetragen und mit ihnen innig vermischt.

Sodann wurde der "Cold Filter Plugging Point" (CFPP) nach DIN EN 116 bestimmt. Die Ergebnisse sind ebenfalls in der nachstehenden Tabelle 4 zusammengefaßt.

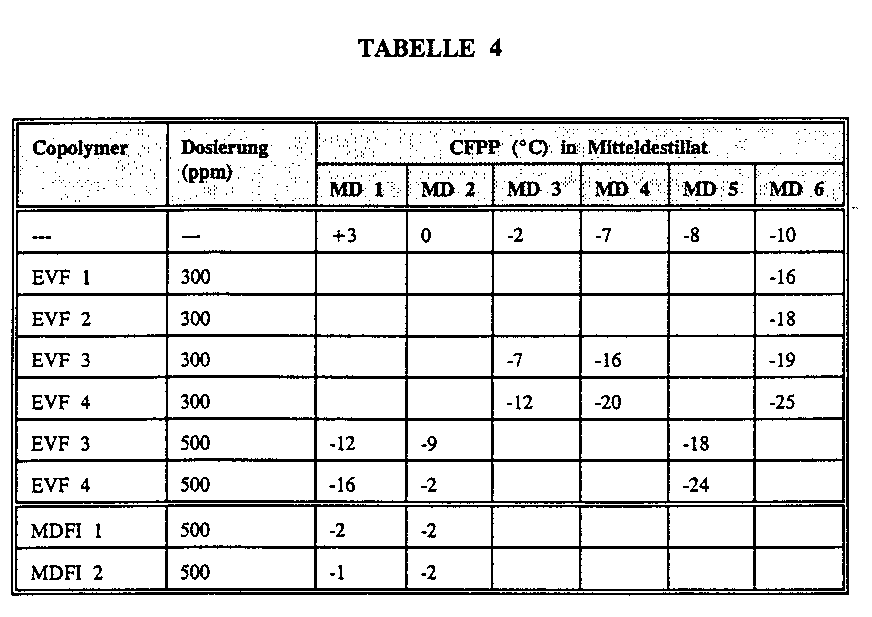

Aus der Tabelle ist zu entnehmen, daß die erfindungsgemäßen Ethylen/ Vinylformiat-Copolymere als Fließverbesserer in einer Vielzahl von Erdöl-Mitteldestillaten verwendet werden können und wesentlich niedrigere "Cold Filter Plugging Points" zeigen als bekannte Fließverbesserer auf der Basis von Ethylen/Vinylpropionat-Copolymeren bzw. Ethylen/Vinylacetat-Copolymeren.

## Patentansprüche

1. Verwendung von binären Copolymeren aus Ethylengrundbausteinen und Vinylformiatgrundbausteinen, wobei die Menge der Vinylformiatgrundbausteine im Copolymer 1 bis 50 Gew.-% des Copolymers beträgt, als Fließverbesserer in Erdöldestillaten, vorzugsweise Brenn- und Treibstoffzusammensetzungen, insbesondere Erdöl-Mitteldestillaten.

2. Verwendung nach Anspruch 1, wobei im Copolymer die Menge der Vinylformiatgrundbausteine 10 bis 40 Gew.-% beträgt.

3. Verwendung nach Anspruch 2, wobei im Copolymer die Menge der Vinylformiatgrundbausteine 20 bis 35 Gew.-% beträgt.

4. Brenn- und Treibstoffzusammensetzung, umfassend einen Brenn- und Treibstoff und 0,001 bis 5 Gew.-%, bezogen auf das Gesamtgewicht der Zusammensetzung, eines Copolymers, wie es in einem der Ansprüche 1 bis 3 definiert ist.

5. Brenn- und Treibstoffzusammensetzung nach Anspruch 4, die ein Erdöl-Mitteldestillat als Brenn- und Treibstoff enthält.

6. Brenn- und Treibstoffzusammensetzung nach Anspruch 4 oder 5, die 0,001 bis 0,2 Gew.-% des Copolymers enthält.

7. Brenn- und Treibstoffzusammensetzung nach Anspruch 6, die 0,01 bis 0,1 Gew.-% des Copolymers enthält.

## Claims

1. The use of binary copolymers composed of ethylene units and vinyl formate units, the amount of the vinyl formate units in the copolymer being from 1 to 50% by weight of the copolymer, as flow improvers in petroleum distillates, preferably fuel and propellant compositions, especially petroleum middle distillates.

2. The use as claimed in claim 1, wherein the amount of the vinyl formate units in the copolymer is from 10 to 40% by weight.

3. The use as claimed in claim 2, wherein the amount of the vinyl formate units in the copolymer is from 20 to 35% by weight.

4. A fuel and propellant composition, comprising a fuel and propellant and from 0.001 to 5% by weight, based on the overall weight of the composition, of a copolymer as defined in any of claims 1 to 3.

5. A fuel and propellant composition as claimed in claim 4, comprising a petroleum middle distillate as fuel and propellant.

6. A fuel and propellant composition as claimed in claim 4 or 5, containing from 0.001 to 0.2% by weight of the copolymer.

7. A fuel and propellant composition as claimed in claim 6, containing from 0.01 to 0.1% by weight of the copolymer.

## Revendications

1. Utilisation de copolymères binaires constitués de composants de base éthylène et de composants de base formiate de vinyle, la quantité des composants de base formiate de vinyle dans le copolymère étant de 1 à 50 % en poids par rapport au copolymère, en tant qu'agents améliorant la fluidité de distillats pétroliers, de préférence de compositions de carburants et combustibles, en particulier de distillats pétroliers moyens.

2. Utilisation selon la revendication 1, dans laquelle la quantité des composants de base formiate de vinyle dans le copolymère est de 10 à 40 % en poids.

3. Utilisation selon la revendication 2, dans laquelle la quantité des composants de base formiate de vinyle dans le copolymère est de 20 à 35 % en poids.

4. Composition de carburant et combustible comprenant un carburant et combustible et une quantité de 0,001 à 5 % en poids, par rapport au poids total de la composition, d'un copolymère tel que défini dans l'une des revendications 1 à 3.

5. Composition de carburant et combustible selon la revendication 4, qui contient un distillat pétrolier moyen en tant que carburant et combustible.

6. Composition de carburant et combustible selon la revendication 4 ou 5, qui contient de 0,001 à 0,2 % en poids du copolymère.

7. Composition de carburant et combustible selon la revendication 6, qui contient de 0,01 à 0,1 % en poids du copolymère.
